# EUROPEAN PATENT SPECIFICATION

(11) **EP 0 364 549 B1**
(45) Date of publication and mention of the grant of the patent: **27.01.1993**
(21) Application number: 89904031.5
(22) Date of filing: 16.03.1989
(51) Int. Cl.: H04N 9/12, G09G 1/20, H01J 31/12

(54) **A COLOUR FLAT DISPLAY SYSTEM**
FLACHE FARBBILDWIEDERGABEVORRICHTUNG
SYSTEME D'AFFICHAGE PLAT EN COULEURS

(30) Priority: 17.03.1988 DE 3808945
(43) Date of publication of application: 25.04.1990
(73) Proprietor: Nokia (Deutschland) GmbH, 75175 Pforzheim (DE)
(72) Inventor: MAYER, Uwe, D-7312 Kirchheim-Teck (DE); TISCHER, Kurt-Manfred, D-7317 Wendlingen (DE)
(86) International application number: EP8900279
(87) International publication number: WO8908968

(56) References cited:
- EP-A- 0 068 288
- FR-A- 2 490 382
- US-A- 4 031 541
- US-A- 4 703 231
- US-A- 4 736 139

## Description

The present invention relates to a colour flat panel display system, i. e. a system that comprises a colour flat display device and a driving device for controlling said display device.

A flat display device, in which the picture, consisting of individual lines, is displayed line-at-a-time, is disclosed in DE-A-36 22 259. To achieve dynamic operation of the area cathodes, which are formed by a periodic array of oxide-coated filaments, an electron stream is taken only from the filaments associated with a line to be displayed. Furthermore, the picture signals are applied to the segments of the counterelectrode line-at-a-time, so that dynamic opertion also exists along the filaments. This effect is achieved because this control of the brightness of the picture elements in accordance with the applied picture signals acts directly on the emission of the filaments.

As just mentioned, the brightness of a picture element is defined by the amplitude of a picture signal. Another possibility to control the brightness would be a time modulation instead of an amplitude modulation. In colour flat display systems both methods are commonly used. The time modulation method is preferred as it avoids the necessity of using D/A converters. This, as the colour signals normally are provided from a digital circuit. The digital signals are stored in a storage means and they are selected in a line-at-a-time-method.

It is rather easy to convert the digitally stored signals into time modulated signals of a fixed amplitude. However, a rather complicated and costly circuit is necessary for to convert the digitally stored signals into analog signals.

The inventive colour flat display system comprises:
- a colour flat display device comprising at least the following parts in the following sequence:

-- a counterelectrode having segments extending in vertical direction, the potential of a segment which defining the amplitude of an emitted electron beam,
-- a plurality of cathode filaments extending in line direction rectangularly to phosphor stripes, coated on a face plate,
-- an anode for extracting electrons from said filaments at locations of active counterelectrodes segments,
-- a control arrangement having at least two electrodes for selecting a line and rows within said line, respectively,
-- and a face plate coated with phosphors for primary colours

- and a driving device comprising

-- a D/A-converting means for converting digital picture signals into analog picture signals defining the amplitudes of electron beams,
-- a storage means for storing said analog signals,
-- and a switching means for

s1 applying the picture signals for one colour at a time to the active segments, which are separated from each other by at least one non-acitve segment,
s2 applying blocking potential to the non-active segments,
s3 applying a beam-deflecting potential to said control arrangement to direct the electron beams to the phosphor stripes of the related colour,
s4 repeating the steps s1 - s3 at least for the two other colours,
s5 shifting all active and non-active segments by one segment and then repeating the steps s1 - s4 till all initially active segments become active segments again,
s6 and repeating the steps s1 - s5 for the next line.

One advantage of this system is that the digital picture signals are converted into analog signals before the signals are stored. This makes necessary only a single D/A-converting means for D/A-conversion instead of many such converters for to convert digital signals that are read out-from a shift register in parallel manner. The storage means of the present case is an analog storage means. Selection of signals as stored within said analog storage means is rather easy as only one line is necessary for reading out the information from one element. In contrast to this, e.g. eight lines are necessary to read out the information from an 8-bit-element of a digital storage means.

A further advantage of the system is that all active segments are separated by at least one non-active segment preferably two non-acitve segments. This prevents interaction between adjacent electron beams.

A further advantage is that by the combination of switching segments and deflecting electron beams, a high picture resolution can be obtained.
Fig. 1 a section through a colour flat display device as used in the system according to the invention;
Fig. 2 an enlarged sectional portion of the phosphor-coated face plate of the flat display device according to Fig. 1;
Fig. 3 a circuit arrangement of a driving device as used in the system according to the present invention; and
Fig. 4a - c diagrams showing picture signals as they are 10 applied in a line-at-a-time-method to different segments, whereby in Fig. 4a the first segments in segment triades are active whereas in Fig. 4b the second segments in such triades are active, and in Fig. 4c the third segments are active.

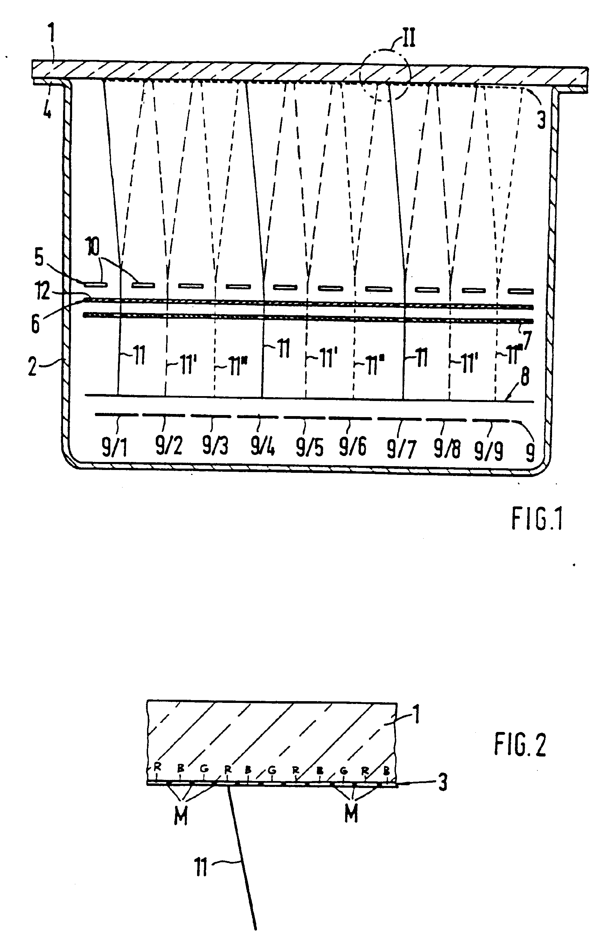

Fig. 1 shows the flat display device in a horizontal section, i.e., in a section taken along a line to be displayed. The glass faceplate 1 and the back metal envelope 2 form an enclosure, which is evacuated. The inside surface of the faceplate 1 is coated with phosphors 3 in the form of dots or stripes. The envelope 2 has a circumferential flange 4, which is vacuum-sealed to the faceplate 1 using a glass frit.

Fig. 2 shows an enlarged portion II of the faceplate 1 to illustrate the phosphor dots or stripes more clearly. The phosphors 3 are present on the inside of the face-plate 1 in the form of dots R, G, B of red, blue, and green phosphors of the usual kind which are arranged in lines. They may also be present there in the form of stripes R, G, B of red, blue, and green phosphors of the usual kind which are perpendicular to the lines to be displayed. The phosphor dots or stripes are surrounded by a black matrix M.

Inside the flat display device, a control arrangement consisting of a deflecting electrode 5 and a line-selecting electrode 6, a perforated extract anode 7, an area cathode formed by a periodic array of oxide-coated filaments 8, and a segmented counterelectrode 9 are present. The attachment and electric connections of these parts are not shown for the sake of clarity.

The deflecting electrode 5 consists of parallel electric conductors 10, which extend perpendicularly to the plane of the paper in Fig. 1. The electrons emitted by the filaments 8 and formed into electron beams pass between the conductors 10. The electron beams are deflected in each line to a number of phosphor dots lying side by side which depends on the magnitude and polarity of the potentials applied to two adjacent conductors 10 at a time. It is possible to use sixfold deflection, for example, i.e., the electron beams are deflected successively to six phosphor dots lying side by side.

The line-selecting electrode 6 consists of parallel conductors 12, which extend perpendicularly to the plane of the paper in Fig. 1 and parallel to the lines to be displayed. Each conductor 12 has holes through which the electron beams can pass. If a conductor 12 has a negative potential connected thereto, it will block ;he electron beams. If a positive potential is connected to a conductor, the electron beams can pass therethrough. In this manner, a selection can be made, line by line, from the electrons emitted by the filaments 8 and accelerated toward the phosphors 3 by the positive potential at the perforated extract anode 7.

The holes in the extract anode 7 are arranged in the form of lines extending parallel to the lines to be displayed.

The filaments 8 of the area cathode, which extend parallel to the plane of the paper in Fig. 1, all lie in a plane parallel to the counterelectrode 9. They also extend parallel to the lines to be displayed on the faceplate 1.

The counterelectrode 9 consists of parallel segments 9/1 to 9/9, which are perpendicular to the filaments 8. The emission of electrons from the filaments can be blocked by connecting a negative potential to the segments, and permitted by connecting a positive potential. By the values lying between those potentials, the electron beams can be modulated to achieve control of the brightness of the phosphor dots. If a modulating potential is connected to two adjacent segments at a time, the electron beams will interact, i.e., the intended modulation of one electron beam will not act on the adjacent electron beam as desired.

To avoid this interaction, a blocking potential is connected to the two segments which are adjacent to a segment having a modulating potential connected thereto. Then, a modulating potential is connected to the next adjacent segment, and the neighbouring segments are connected to blocking potential. Thereafter, a modulating potential is connected to the next segment, and the neighbouring segments are connected to blocking potential. This is continued until a modulating potential was connected to all segments. After that, the cycle of the connection of the modulating potentials for displaying the next line can begin.

Fig. 1 shows the electron beams formed successively by the cyclic energization of the segments. To produce a picture by displaying one line at a time, the segments 9/1 to 9/9 are divided into triads lying side by side. In the first third of the time period available for the display of a line, the respective first segments 9/1, 9/4, and 9/7 in each triad are connected to the modulating potential, i.e., the picture signal for the associated phosphor dots R, G, B. The second segments 9/2, 9/5, and 9/8 and the third segments 9/3, 9/6, and 9/9 of each triad are at blocking potential. The resulting electron beams 11 are shown in Fig. 1 as solid lines. Potentials at the deflecting electrode 5 cause a sixfold deflection of the electron beams 11 to six phosphor dots lying side by side. In Fig. 1, the electron beams 11 are shown deflected to the first of the sixth dots. Their positions on striking the last of the six- dots are shown by broken lines.

In the second third of the time period, the picture signals are applied to the respective second segments 9/2, 9/5, and 9/8 and in each triad. The first and third segments 9/1, 9/4, 9/7 and 9/3, 9/6, 9/9 are at blocking potential. The resulting electron beams 11′ are shown by broken lines in Fig. 1, deflected to the first and last of the associated six phosphor dots.

In the last third of the time period, the picture signals are applied to the respective third segments 9/3, 9/6, and 9/9 in each triad. The first and second segments 9/1, 9/4, 9/7 and 9/2, 9/5, 9/8 are at blocking potential. The resulting electron beams 11˝ are shown dotted in their deflected positions.

The line-selecting electrode 6 then selects the next line to be displayed, and the process described above is repeated for this line. After the last line has been displayed, the display of the next picture begins.

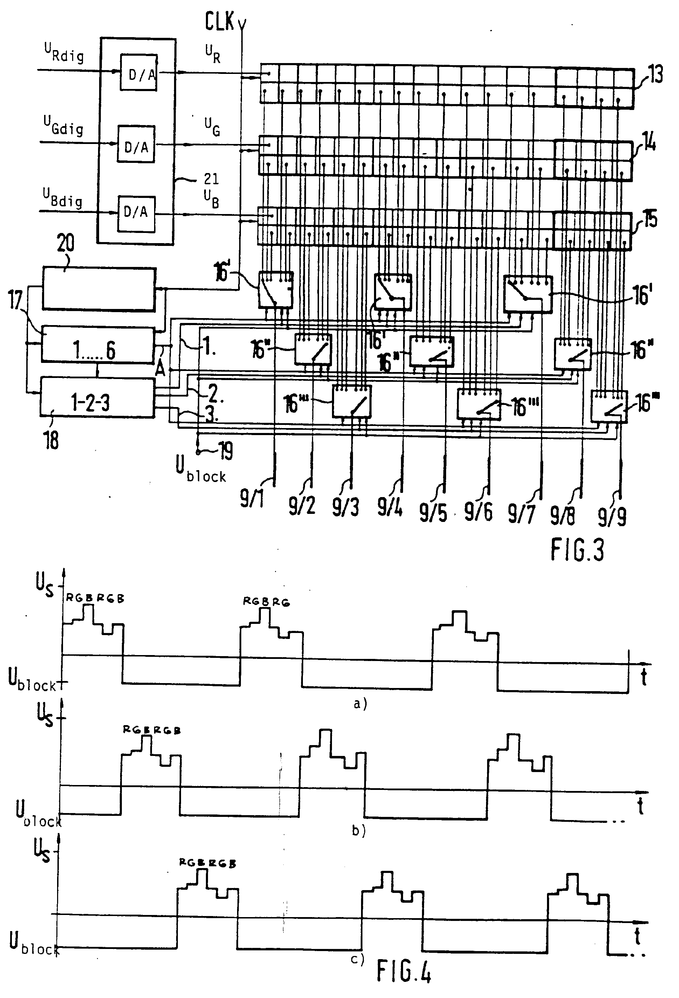

Fig. 3 is a schematic diagram of a circuit for carrying out the driving method described above. The picture signals are present in the form of digital picture signals U_{Rdig}, U_{Gdig}, and U_{Bdig}. By a D/A - converting means they are converted into analog color signals U_{R}, U_{G},
and U_{B} and are fed line by line into analog shift registers 13, 14, and 15, respectively, with the aid of a suitable clock CLK. The shift registers have one output for each of their locations, so that the stored information can be withdrawn in parallel, Since the electron beams are deflected to six successive phosphor dots, the picture signals must be applied to the respective segment successively in the form of six color signals U_{R}, U_{G}, U_{B}, U_{R}, U_{G}, U_{B}. To this end, switches 16′, 16˝, 16′˝ are provided between the outputs of the shift registers 13, 14, 15 and the segments 9/1 to 9/9. They successively apply the respective picture signals and the blocking potential to the segments. The switches 16′, 16˝, and 16′˝ are controlled by a counter 17, which counts to 6, and a counter 18, which counts to 3. The counter 17 is controlled by the clock CLK and sends a switching pulse over a line to the counter 18 whenever it has counted to six.

In the example shown, the flat display device has 54 color dots per row, 18 for each of the three colors. Accordingly, each shift register 13, 14, and 15 has 18 locations. Since 18 phosphor dots must be excited in each third of the time period for a line to be displayed, three segments must be energized at a time to obtain a sixfold deflection of the electron beams. This requires three switches 16′, 16˝, 16′˝. Thus, a total of 9 switches are present which must be activated three at a time.

The output A of the counter 17, which counts from 1 to 6, is connected to all switches 16′, 16˝, 16′˝. The pulses provided by the counter 17 place the switches in their first to sixth positions. In these positions, the six inputs of the switches are successively connected to the respective output.

The counter 18, which counts from 1 to 3, has three outputs 1., 2., and 3.. The output 1. is connected to the switches 16′, the output 2. to the switches 16˝, and the output 3. to the switches 16′˝. In the first third of the time period for a line to be displayed, the output 1. provides a signal which activates only the switches 16′, so that picture signals are applied to segments 9/1, 9/4 and 9/7. The other outputs 2. and 3. provide no signal, so that the switches 16˝ and 16 ˝′ are not activated. In this condition, these switches 16˝ and 16˝′ apply the blocking potential Uₛₚₑᵣᵣ from the terminal 19 to the segments connected to their outputs, i.e., the segments 9/2, 9/5, 9/8 and 9/3, 9/6, 9/9, respectively.

In the second third of the time period, the output 2. provides a signal, and the outputs 1. and 3. do not. Now, the switches 16′ are activated and connect the segments 9/2, 9/5, and 9/8 successively to the associated outputs of the shift registers 13, 14, 15. The switches 16′ and 16˝ connect the blocking potential U_{block} to the segments 9/1, 9/4, 9/7 and 9/3, 9/6, 9/9, respectively.

In the last third of the time period, the output 3. produces a signal, and the outputs 1. and 2. do not. Now, the switches 16′˝ are activated and connect the segments 9/3, 9/6 and 9/9 successively to the associated outputs of the shift registers 13, 14, 15. The switches 16′ and 16˝ apply the blocking potential Uₛₚₑᵣᵣ to the segments 9/1, 9/4, 9/7 and 9/2, 9/5, 9/8, respectively.

Then,the cycle for the display of the next line is started by suitably energizing the line-selecting electrode 6 and subsequently applying the picture signals to the segments 9/1 through 9/9 as described.

Figs. 4a to 4c show the waveforms of the picture signals for one line, which are applied as segment voltages U_{S} to the segments 9/1 to 9/9.

Fig. 4a shows the picture signals U_{R, G, B} which are simultaneously applied to the segments 9/1, 9/4, and 9/7 in the first third of the time period T, and the blocking potential U_{block} applied in the second and third thirds.

Fig. 4b shows the picture signals U_{R, G, B} which are simultaneously applied to the segments 9/2, 9/5, and 9/8 in the second third of the time period T, and the blocking potential U_{block} applied in the first and third thirds.

Fig. 4c shows the picturs signals U_{R, G, B} which are simultaneously applied to the segments 9/3, 9/6, and 9/9 in the third third of the time period T, and the blocking potential U_{block} applied in the first and second thirds.

The successive energization of the segments is readily apparent. At the end of the time period T, all phosphor dots in a line were activated by the electron beams 11, 11′, 11˝ once, so that one complete line was displayed.

If - assuming sixfold deflection of the electron beams in the line - the number of phosphor dots in the lines is not divisible by six, an additional counter 20 must be provided. The counter 20 is controlled by the clock CLK and counts to the number of phosphor dots in the lines. Upon reaching this number, it provides a reset pulse to the counters 17 and 18. The counters 17 and 18 stop their counting process and begin at 1 again at the beginning of the next line to be displayed.

In an actual device electron beams are deflected to 1164 color stripes instead to 54 dots as described in the above explanatory description. 198 segments 9 and 199 deflecting conductors 10 were used for a panel having 10 inches (ca. 25 cm) in diameter.

## Claims

1. A colour flat display system comprising
- a colour flat display device comprising at least the following parts in the following sequence:
-- a counterlectrode having segments extending in vertical direction, the potential of a segment defining the amplitude of an emitted electron beam,
-- a plurality of cathode filaments extending in line direction rectangularly to phosphor stripes, coated on a face plate,
-- an anode for extracting electrons from said filaments at locations of active counterelectrode segments,
-- a control arrangement having at least two electrodes for selecting a line and rows within said line, respectively,
-- and a face plate coated with phosphors for primary colours (R, G, B),
- and a driving device comprising
-- a D/A-converting means for converting digital picture signals (U_{R}, U_{G}, U_{B}) into analog picture signals defining the amplitudes of electron beams,
-- a storage means (13, 14, 15) for storing said analog signals,
-- and a switching means for
s1 applying the picture signals for one colour at a time to the active segments, which are separated from each other by at least one non-active segment,
s2 applying blocking potential (Uₛₚₑᵣᵣ) to the non-active segments,
s3 applying a beam-deflecting potential to said control arangement to direct the electron beams to the phosphor stripes of the related colour,
s4 repeating the steps s1 - s3 at least for the two other colours,
s5 shifting all active and non-active segments by one segment and then repeating the steps s1 - s4 till all initially active segments become active segments again,
s6 and repeating the steps s1 - s5 for the next line.

2. A system according to claim 1, **characterized in that** said storage means comprises three analog shift registers (13, 14, 15), one for each of the picture signals for the three primary colours.

3. A system according to claim 1, **characterized in that** at one time each third segment (9.1, 9.4, 9.7; 9.2, 9.5, 9.8; 9.3, 9.6, 9.9) is active.

4. A system according to claim 1, **characterized** **in that** said switching means comprises a counter means (17) for developing a switching signal to switch to step s5 as soon as step s1 - s4 are finished six times, i. e. twice for the three primary colours.

## Patentansprüche

1. Farb-Flachbildschirmsystem mit
- einem Farb-Flachbildschirmgerät, bestehend aus mindestens den folgenden Teilen in der folgenden Reihenfolge:
-- einer Gegenelektrode mit sich in vertikaler Richtung erstreckenden Segmenten, wobei das Potential eines segments die Amplitude eines ausgesandten Elektronenstrahls bestimmt,
-- mehreren sich in Zeilenrichtung senkrecht zu Phosphorstreifen, die auf einer Frontplatte in Form einer Beschichtung aufgebracht sind, erstreckenden Kathodenfäden,
-- einer Anode zum beziehen von Elektronen von den Fäden an den stellen, an denen sich aktive Gegenelektroden-Segmente befinden,
-- einer Steueranordnung mit mindestens zwei Elektroden zur Auswahl einer Zeile bzw. von Reihen innerhalb der betreffenden Zeile,
-- und einer mit Phosphoren der Hauptfarben (U_{R}, U_{G}, U_{B}) beschichteten Frontplatte,
- und mit einer Antriebseinrichtung, bestehend aus
-- einer Digital/Analog-Wandlereinrichtung zum Umwandeln von digitalen Bildsignalen (U_{R}, U_{G}, U_{B}) in analoge, die Amplituden von Elektronenstrahlen definierende Bildsignale,
-- einer Speichereinrichtung (13, 14, 15) zum Speichern der analogen Signale,
-- und Schaltmitteln, mittels derer
s1 den aktiven Segmenten, die voneinander jeweils durch mindestens ein nicht aktives Segment getrennt sind, jeweils die Bildsignale für eine Farbe zugeführt werden,
s2 an die nicht aktiven Segmente ein Sperrpotential (Uₛₚₑᵣᵣ) angelegt wird,
s3 der Steuereinrichtung ein Strahlablenkpotential zugeführt wird, mittels dessen die Elektronenstrahlen auf die Phosphorstreifen der betreffenden Farbe gerichtet werden,
s4 die schritte s1 - s3 mindestens für zwei weitere Farben wiederholt werden,
s5 alle aktiven und nicht aktiven Segmente um ein Segment verschoben und anschließend die schritte s1 - s4 solange wiederholt werden, bis alle anfangs aktiven Segmente wieder aktiv sind,
s6 und die Schritte s1 - s5 für die nächste Zeile wiederholt werden.

2. System nach Anspruch 1, dadurch gekennzeichnet, daß die Speichereinrichtung drei analoge Schieberegister (13, 14, 15) umfaßt, die jeweils den Bildsignalen einer der drei Hauptfarben zugeordnet sind.

3. System nach Anspruch 1, dadurch gekennzeichnet, daß jeweils jedes dritte Segment (9.1, 9.4, 9.7; 9.2, 9.5, 9.8; 9.3, 9.6, 9.9) aktiv ist.

4. System nach Anspruch 1, dadurch gekennzeichnet, daß die Schalteinrichtung einen Zähler (17) umfaßt, der ein Schaltsignal zum Weiterschalten zum Schritt s5 erzeugt, sobald die schritte s1 - s4 sechsmal, das heißt je zweimal für die drei Hauptfarben, ausgeführt wurden.

## Revendications

1. Un système plat d'affichage couleur comprenant
- Une unité plate d'affichage couleur, composée d'au moins les parties suivantes, ordonnées comme suit:
-- une contre-électrode, possédant des segments s'étendant dans le sens vertical, le potentiel d'un segment définissant l'amplitude d'un faisceau d'électrons émis,
-- un ensemble de filaments cathodiques, s'étendant en ligne, perpendiculairement à des bandes fluorescentes, appliquées sur une plaque frontale,
-- une anode, servant à extraire les électrons des dits filaments aux endroits où se trouvent des serpents actifs de contre-électrode,
-- un dispositif de contrôle, comportant au moins deux électrodes servant à sélectionner respectivement une colonne et les lignes de cette colonne,
-- et une plaque frontale recouverte de poudres luminescentes pour les couleurs primaires (R,V,B),
- et une unité de commande composée
-- d'un organe de conversion numérique-analogique, servant à convertir les signaux visuels numériques (U*r*, U*v*, U*b*) en signaux visuels analogiques définissant les amplitudes des faisceaux d'électrons,
-- d'un organe de mémorisation (13, 14, 15), servant à mémoriser les signaux analogiques sus-mentionnés,
-- et d'un organe de commutation, servant à
p1 appliquer les signaux visuels pour une seule couleur à la fois aux segments actifs, séparés les uns des autres par au moins un serpent non-actif,
p2 d'appliquer le potentiel de blocage (U*bloc*) aux serpents non-actifs,
p3 d'appliquer un potentiel de dérivation de faisceau au dit dispositif de contrôle, afin de diriger les faisceaux d'électrons vers les bandes fluorescentes de la couleur correspondante,
p4 de renouveler les phases p1 à p3 pour les deux autres couleurs au moins,
p5 de déplacer d'un segment tous les segments actifs et non-actifs et de répéter ensuite les phases p1 à p4 jusqu'à ce que tous les segments initialement actifs redeviennent des serpents actifs,
p6 et de répéter les phases p1 à p5 pour la ligne suivante.

2. Un système selon la revendication 1, caractérisé en ce que le dit organe de mémorisation comprend trois registres de déplacement analogiques (13, 14, 15), un pour chacun des signaux visuels des trois couleurs primaires.

3. Un système selon la revendication 1, caractérisé en ce que seul un segment sur trois est actif simultanément (9.1, 9.4, 9.7; 9.2, 9.5, 9.8; 9.3, 9.6, 9.9).

4. Un système selon la revendication 1, caractérisé en ce que le dit organe de commutation comprend un organe de comptage (17) afin d'émettre un signal de commutation permettant de passer à la phase p5 dès que les phases p1 à p4 ont été réalisées six fois, c.-à-d. deux fois pour chacune des trois couleurs primaires.
